# EUROPEAN PATENT SPECIFICATION

(11) **EP 3 869 731 B1**
(45) Date of publication and mention of the grant of the patent: **19.06.2024**
(21) Application number: 21155181.7
(22) Date of filing: 04.02.2021
(51) Int. Cl.: G06F 21/62, H04L 9/32, H04L 9/00

(54) **DATA MANAGEMENT PROGRAM, DATA MANAGEMENT APPARATUS, AND DATA MANAGEMENT METHOD**
DATENVERWALTUNGSPROGRAMM, DATENVERWALTUNGSGERÄT UND DATENVERWALTUNGSMETHODE
PROGRAMME DE GESTION DE DONNÉES, APPAREIL DE GESTION DE DONNÉES ET MÉTHODE DE GESTION DE DONNÉES

(30) Priority: 21.02.2020 JP 2020028779
(43) Date of publication of application: 25.08.2021
(73) Proprietor: Fujitsu Limited, Kawasaki-shi, Kanagawa 211-8588 (JP)
(72) Inventor: Shimizu, Toshihiro, Kawasaki-shi, Kanagawa 211-8588 (JP); Nakagawa, Itaru, Kawasaki-shi, Kanagawa 211-8588 (JP); Ito, Akira, Kawasaki-shi, Kanagawa 211-8588 (JP)
(74) Representative: Hoffmann Eitle

(56) References cited:
- CA-A1- 3 051 762
- JP-A- 2019 174 995

## Description

### FIELD

The embodiments discussed herein are related to a management program, a management apparatus, and a management method.

### BACKGROUND

Actions referred to as data governance have been gaining attention in which an enormous amount of data generated daily is recorded, stored, and analyzed to be managed as data assets. In the data governance, ways of management relating to generation, storage, disclosure, and use of the data are defined and controlled. In the case of establishing the data governance, it is preferable that referring to processing histories such as information on how and where the data has been processed is possible.

As a related technique, there is proposed, for example, a technique of checking data while limiting a disclosure range, by managing a graph including a dependency relationship between a leaf node in which user data is stored and a hash node including a hash value of the leaf node. There is also proposed a technique of managing a right of data access to a distributed ledger based on a result of a smart contract executed depending on contents of transactions stored in the distributed ledger.

Related techniques are disclosed in, for example, Japanese Laid-open Patent Publication No. 2018-195907 and Japanese Laid-open Patent Publication No. 2019-74910.

CA 3051762 A1 discloses a method comprising receiving, by a blockchain node in the blockchain network, a request to read a particular block of the blockchain, wherein the request is received from a light-weight node of the blockchain network and includes an identity of the light-weight node, and wherein the particular block includes an original Merkle tree associated with the particular block; identifying, by the blockchain node, permissions associated with the identity of the light-weight node; generating, by the blockchain node, an isolated Merkle tree based on the original Merkle tree included in the block, the isolated Merkle tree including only transactions from the original Merkle tree that are determined to be accessible by the light-weight node based on the identified permissions, wherein the isolated Merkle tree is consistent with the original Merkle tree; and sending, by the blockchain node, a response to the light-weight node including the isolated Merkle tree.

JP 2019-174995 A discloses an access restriction system restricting an access to information registered in a public block chain comprising a private block chain installed in each of multiple user groups, a data registration part that encrypts data to register in the public block chain, and a key registration part registering a key used in the encryption in the private block chain installed in a user group to which data browsing is permitted.

Processing histories of data are managed by being linked through a hash chain in which hash values of the processing histories are coupled to enable check of falsification by the others. Meanwhile, the processing histories of data include know-how of data processing by corporations and the like. Accordingly, access restriction is provided for processing histories that are desired to be kept secret and such processing histories are not disclosed to a non-owner of the access right.

When the access to the processing histories is restricted, for example, there is a case where falsification check in processing histories before the restricted histories becomes difficult. In order to establish data governance with high reliability, there is a demand for a technique that enables falsification check without disclosure of processing histories set not to be disclosed by access restriction.

In one aspect of the embodiments, an object is to provide a management program, a management apparatus, and a management method that enables falsification check without disclosure of a processing history set not to be disclosed.

### SUMMARY

The present invention provides a management program, in accordance with claim 1.

The present invention also provides a management apparatus, in accordance with claim 8.

The present invention also provides a management method, in accordance with claim 9.

According to one aspect, it is possible to perform falsification check without disclosure of a processing history set not to be disclosed.

### BRIEF DESCRIPTION OF DRAWINGS

FIG. 1 is a diagram for explaining an example of a management apparatus;
FIG. 2 is a diagram for explaining history data;
FIG. 3 is a view illustrating an example of the history data and a hash value;
FIG. 4 is a diagram for explaining linking of the history data;
FIG. 5 is a view illustrating an example of association relationships between a hash ID and the history data;
FIG. 6 is a diagram for explaining a notation example of the history data and the hash value;
FIG. 7 is a diagram for explaining a history link that enables access restriction;
FIG. 8 is a diagram illustrating an example of functional blocks in a management apparatus;
FIG. 9 is a diagram illustrating an example of hardware of the management apparatus;
FIG. 10 is a diagram for explaining a history link that enables access restriction;
FIG. 11 is a flowchart illustrating an example of an operation of generating a simplified processing history;
FIG. 12 is a diagram illustrating an example of generating the simplified processing history;
FIG. 13 is a diagram illustrating an example of generating the simplified processing history;
FIG. 14 is a diagram illustrating an example of automatically setting a specification range of an access restriction target; and
FIG. 15 is a diagram for explaining a modified example of history generation that enables access restriction.

### DESCRIPTION OF EMBODIMENTS

Embodiments are described below with reference to the drawings.

### [First Embodiment]

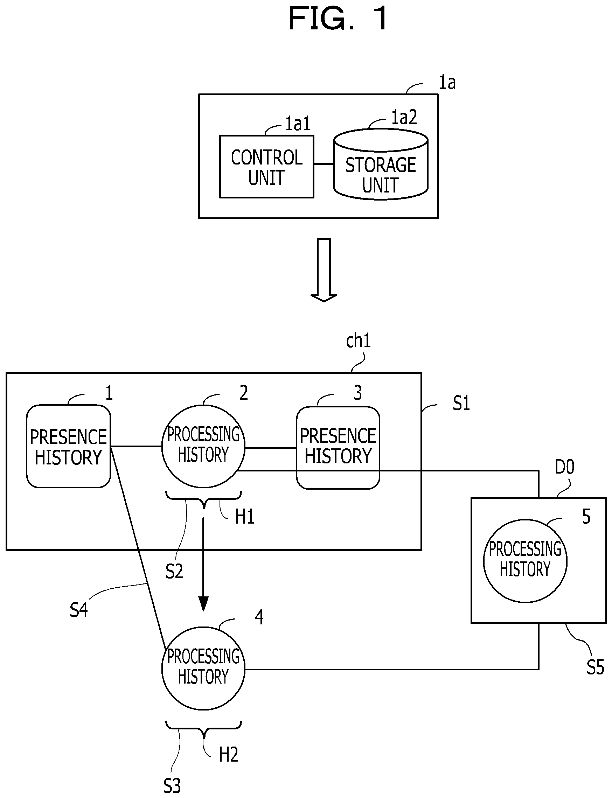

FIG. 1 is a diagram for explaining an example of a management apparatus. A management apparatus 1a includes a control unit 1a1 and a storage unit 1a2. The control unit 1a1 generates a data processing sequence in which processing histories including processing contents of data are linked by chain coupling, and sets a first data processing range including a first processing history being a target of access restriction in the data processing sequence.

The control unit 1a1 also generates a second processing history associated with the first processing history and not being the target of access restriction. The control unit 1a1 also chain-couples (couples in chain) a second data processing range including the second processing history to the data processing sequence and generates history information including a third processing history that is chain-coupled to the first data processing range and the second data processing range.

The storage unit 1a2 holds history information and a data structure of the data processing sequence. Note that a not-illustrated processor included in the management apparatus 1a implements functions of the control unit 1a1 by executing a predetermined program.

Operations are described based on the example illustrated in FIG. 1. Note that, in the chain coupling, unique values are coupled to one another. For example, hash values may be used as unique values. In the following description, the unique values are referred to as hash values.

[Step S1] The control unit 1a1 generates a data processing sequence ch1 by linking presence histories 1 and 3 including properties of data and a processing history 2 including processing contents of the data to one another by performing chain coupling based on the hash values.

The presence history 1 includes properties of input data. The processing history 2 includes processing contents in processing of the input data. The presence history 3 includes properties of resultant data obtained by the processing of the input data. The control unit 1a1 also calculates the hash values of the presence histories 1 and 3 and the processing history 2, respectively, and performs the chain coupling using the hash values to generate the chronologically ordered data processing sequence ch1.

[Step S2] The control unit 1a1 sets a data processing range H1 including the processing history 2 (first processing history) being the target of access restriction in the data processing sequence ch1.

[Step S3] The control unit 1a1 generates a processing history 4 (second processing history) not being the target of access restriction and associated with the processing history 2 included in the data processing range H1.

[Step S4] The control unit 1a1 chain-couples a data processing range H2 including the processing history 4 to the data processing sequence ch1.

[Step S5] The control unit 1a1 generates a history data group D0 that includes a processing history 5 (third processing history) chain-coupled to the data processing range H1 and the data processing range H2 and that is used to determine to which one of the data processing range H1 and the data processing range H2 access is to be made. The processing history 5 in the history data group D0 is history data of a branching point through which tracking-back to either the data processing range H1 or the data processing range H2 is possible.

Assume that the control unit 1a1 sets access rights for the data processing range H1 in the data processing sequence ch1 and discloses the data processing range H1 to an owner of the access right but does not disclose the data processing range H1 to a non-owner of the access right.

In this case, the control unit 1a1 extracts information not being the target of access restriction from the processing history 2 to generate the processing history 4 for publication, sets the data processing range H2 including the processing history 4 as a target of publication, and chain-couples the data processing range H2 to the data processing sequence ch1.

The management apparatus 1a thereby generates a new history for publication associated with a non-public history access to which is restricted in the data processing sequence in which the data processing history is chain-coupled by using the hash value, and chain-couples the new history to the data processing sequence. A path through which tracking-back to either the non-public history or the public history is possible is thereby generated and it is possible to track back the chain coupling of the hash values to the processing history for publication. Accordingly, even when access to the processing history is restricted, it is possible to check whether the processing history set not to be disclosed by the access restriction is falsified or not without disclosure of the processing history.

### <History Data>

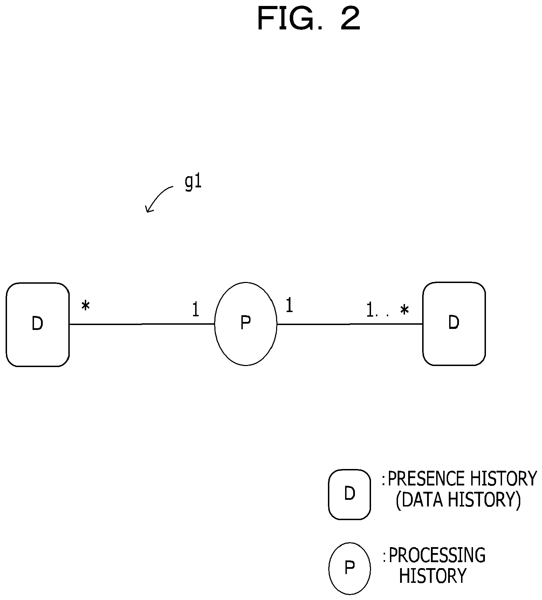

FIG. 2 is a diagram for explaining history data. The history data includes the presence history or the processing history. Reference sign D in FIG. 2 indicates the presence history of data and is property information of the data. For example, information such as a creation date of the data and an owner of the data corresponds to the presence history.

Reference sign P in FIG. 2 indicates the processing history of the data and is information on processing performed on the data. For example, information such as what kind of processing is performed on which data input and what kind of output is obtained corresponds to the processing history of data.

A Link between D and P is expressed in a graph structure. In the example of graph g1, processing P indicates that processing is performed on an input D on the left side and an output D on the right side is generated.

Multiplicity of the data may be written by, for example, using unified modeling language (UML). Reference signs "*", "1 ... *", and "1" in FIG. 2 indicate multiplicity written in UML. Reference sign "*" indicates that the multiplicity is 0 or more (indicates that there are zero or more inputs D) and "1 ... *" indicates that the multiplicity is 1 or more (indicates that there are one or more outputs D). Reference sign "1" indicates that multiplicity is 1 (indicates that processing P is processing of one input and one output). In the following description, the presence history is sometimes referred to as data history. In some cases, the data history is written as data history (D) and the processing history is written as processing history (P).

### <Hash Value and Linking of History Data>

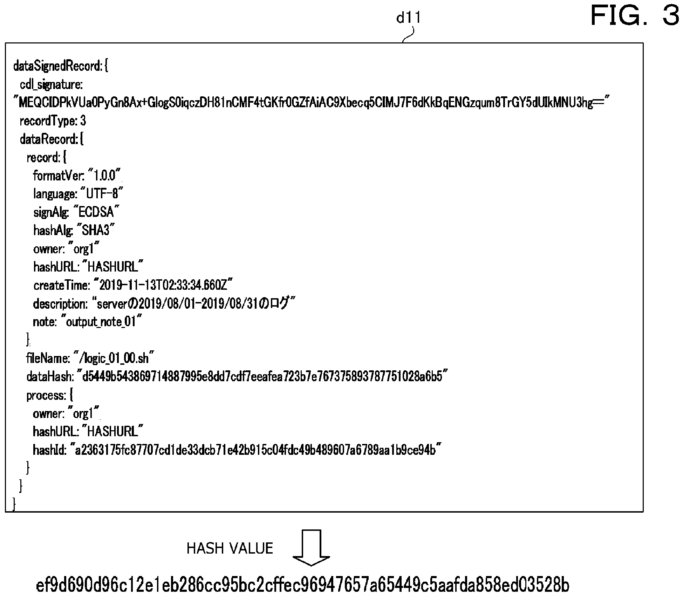

FIG. 3 is a view illustrating an example of the history data and the hash value. History data d11 illustrates an example in which a data structure is written in JavaScript (registered trademark) object notation (json). A hash value is calculated from a series of character strings in the history data d11. The hash value of the history data d11 is calculated to be "ef9d ... 3528b".

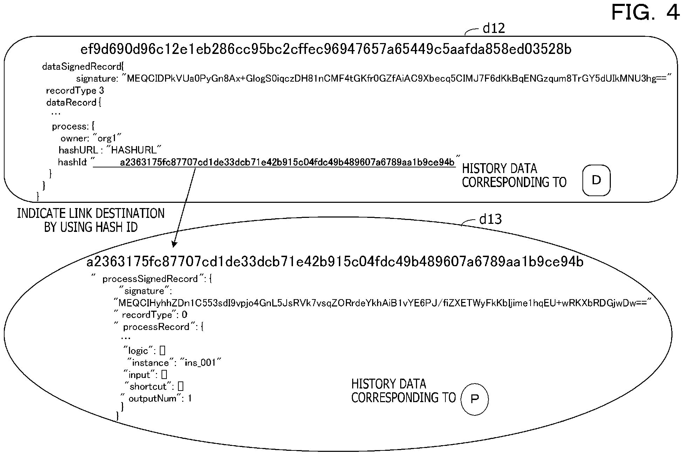

FIG. 4 is a diagram for explaining linking of the history data. History data d12 corresponds to data history (D) and history data d13 corresponds to processing history (P). A hash value of the history data d12 is calculated to be "ef9d ... 3528b" and a hash value of the history data d13 is calculated to be "a236 ... ce94b".

A path extending from one piece of history data to another piece of history data is linked by using a hash value written in a field of a hash ID ("hashId" in FIG. 4). In the example of FIG. 4, the hash value written in the hash ID of the history data d12 is "a236 ... ce94b". Accordingly, the history data d13 having the hash value of "a236 ... ce94b" is the link destination of the history data d12.

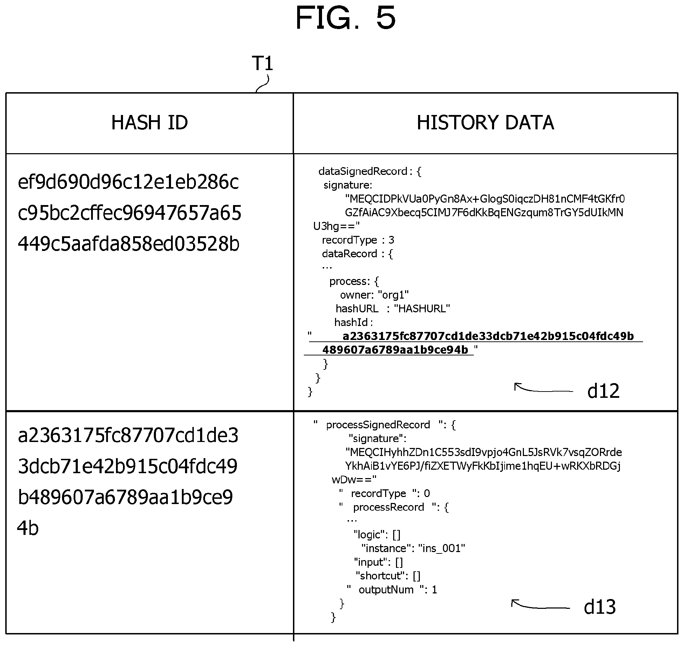

FIG. 5 is a view illustrating an example of association relationships between the hash ID and the history data. A table T1 illustrates association relationships between the hash ID and the history data (json data). Hash ID = ef9d ... 3528b is associated with the fact that the link destination data is the history data d12 and hash ID = a236 ... ce94b is associated with the fact that the link destination data is the history data d13. Such a table T1 enables linking of the history data through the hash ID (hash value) and enables tracing-back of the link.

### <Notation of History Data and Hash Value>

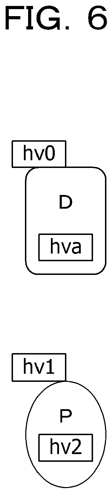

FIG. 6 is a diagram for explaining a notation example of the history data and the hash value. A hash value A is denoted by hva. Hash values illustrated outside frames expressing the data history (D) and the processing history (P) are each assumed to be a hash value of the entire history data.

Accordingly, in the example illustrated in FIG. 6, reference sign hv0 denotes the hash value of the data history (D) and hv1 denotes the hash value of the processing history (P). In description given according to the example of FIG. 4, reference sign hv0 denotes the hash value of the history data d12 (history data of data history (D)) and hv0 = ef9d ... 3528b. Reference sign hv1 denotes the hash value of the history data d13 (history data of processing history (P)) and hv1 = a236 ... ce94b.

Hash values illustrated inside the frames expressing the data history (D) and the processing history (P) are each assumed to be a hash value stored in the history data. Accordingly, reference sign hva denotes a hash value stored in the data history (D) and, in description given according to the example of FIG. 4, hva = ef9d ... 3528b. Reference sign hv2 denotes a hash value stored in the processing history (P).

### <History Link That Enables Access Restriction>

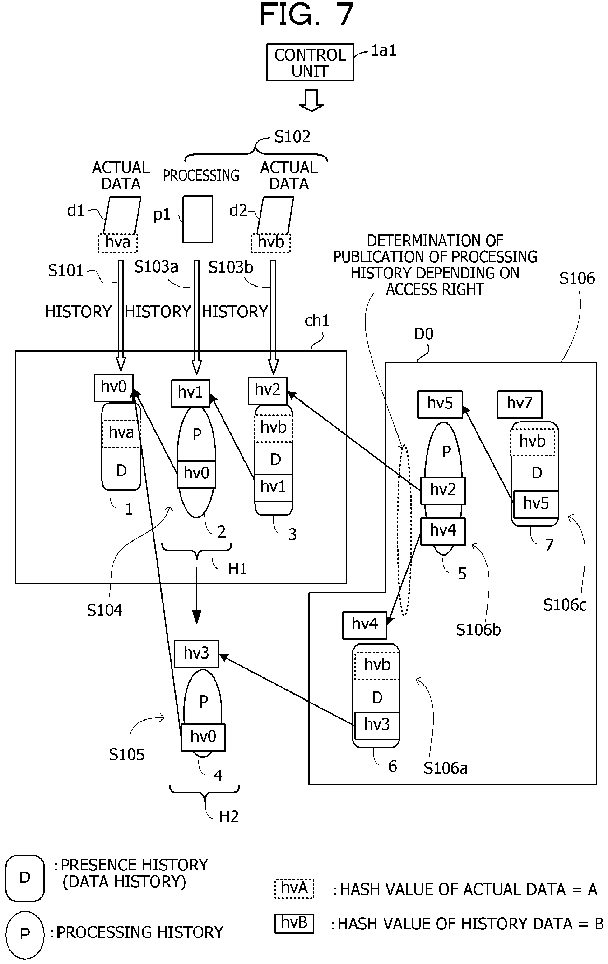

FIG. 7 is a diagram for explaining a history link that enables access restriction. Assume that there is actual data d1 and processing p1 is performed on the actual data d1 to generate actual data d2.

The actual data d2 is assumed to be made public. In this case, assume that the access restriction is set for detailed processing procedures in which the actual data d2 is generated with the publication of the actual data d2 and the procedures are not disclosed to a non-owner of the access right. Also assume that a processing history obtained by simplifying the detailed processing procedures for the actual data d2 is generated and the simplified processing history is made public.

Steps of generating the history link that enables access restriction are described below. Note that the hash values illustrated in the dotted-line rectangular frames are each a hash value of actual data and the hash values illustrated in the solid-line rectangular frames are each a hash value of history data.

[Step S101] The control unit 1a1 generates a data history (D)1 of actual data d1. In this case, the control unit 1a1 calculates a hash value "hva" of the actual data d1 and generates the data history (D)1 in which the hash value "hva" is stored. The control unit 1a1 then calculates a hash value "hv0" of the data history (D)1 and assigns the hash value "hv0" to the data history (D)1.

[Step S102] The control unit 1a1 generates actual data d2 by performing processing p1 on the actual data d1.

[Step S103a] The control unit 1a1 generates a processing history (P)2 of the processing p1. In this case, the control unit 1a1 generates the processing history (P)2 in which the hash value "hv0" of the data history (D)1 is stored. The control unit 1a1 then calculates a hash value "hv1" of the processing history (P)2 and assigns the hash value "hv1" to the processing history (P)2.

[Step S103b] The control unit 1a1 generates a data history (D)3 of the actual data d2. In this case, the control unit 1a1 calculates a hash value "hvb" of the actual data d2 and generates the data history (D)3 in which the hash value "hvb" of the actual data d2 and the hash value "hv1" of the processing history (P)2 are stored. The control unit 1a1 then calculates a hash value "hv2" of the data history (D)3 and assigns the hash value "hv2" to the data history (D)3.

[Step S104] The control unit 1a1 sets the processing history (P)2 as the target of access restriction according to a user instruction. The control unit 1a1 then sets a data processing range H1 including the processing history (P)2 being the target of access restriction in the data processing sequence ch1.

[Step S105] The control unit 1a1 generates a processing history 4 (simplified processing history (P)4) not being the target of access restriction and associated with the processing history (P)2 included in the data processing range H1. The simplified processing history (P)4 is a processing history obtained by extracting contents that are not the target of access restriction from the processing history (P)2 and simplifying the contents to allow publication of the contents.

In this case, the control unit 1a1 generates the simplified processing history (P)4 including the hash value "hv0" of the data history (D)1 and calculates a hash value "hv3" of the simplified processing history (P)4. The control unit 1a1 then assigns the hash value "hv3" to the simplified processing history (P)4 to chain-couple a data processing range H2 including the simplified processing history (P)4 to the data processing sequence ch1.

[Step S106] The control unit 1a1 generates a history data group D0 that includes a processing history (P)5 (third processing history) chain-coupled to the data processing range H1 and the data processing range H2. The history data group D0 includes the processing history (P)5 and data histories (D)6 and 7.

[Step S106a] The control unit 1a1 generates the data history (D)6 in which the hash value "hvb" of the actual data d2 and the hash value "hv3" of the simplified processing history (P)4 are stored. The control unit 1a1 then calculates a hash value "hv4" of the data history (D)6 and assigns the hash value "hv4" to the data history (D)6.

[Step S106b] The control unit 1a1 generates the processing history (P)5 in which the hash value "hv4" of the data history (D)6 and the hash value "hv2" of the data history (D)3 are stored. The control unit 1a1 then calculates a hash value "hv5" of the processing history (P)5 and assigns the hash value "hv5" to the processing history (P)5.

[Step S106c] The control unit 1a1 generates the data history (D)7 in which the hash value "hvb" of the actual data d2 and the hash value "hv5" of the processing history (P)5 are stored. The control unit 1a1 then calculates a hash value "hv7" of the data history (D)7 and assigns the hash value "hv7" to the data history (D)7.

Assume that the control unit 1a1 sets access rights for the data processing range H1 in the data processing sequence ch1 and discloses the data processing range H1 to an owner of the access right but does not disclose the data processing range H1 to a non-owner of the access right.

In this case, the control unit 1a1 extracts information not being the target of access restriction from the processing history (P)2 to generate the simplified processing history (P)4 for publication, sets the data processing range H2 including the simplified processing history (P)4 as the target of publication, and chain-couples the data processing range H2 to the data processing sequence ch1. The processing history 5 in the history data group D0 is history data of a branching point through which tracking-back to either the data processing range H1 or the data processing range H2 is possible.

As described above, the management apparatus 1a newly generates the simplified processing history (P)4 for publication associated with the non-public processing history (P)2 access to which is restricted and couples the simplified processing history (P)4 to the processing history (P)2 through a hash chain. Thus, even if the access to the processing history (P)2 is restricted, it is possible to track back the hash chain through the simplified processing history (P)4 to a history before the processing history (P)2. Accordingly, it is possible to perform falsification check based on the hash chain without disclosure of the non-public processing history (P)2.

### [Second Embodiment]

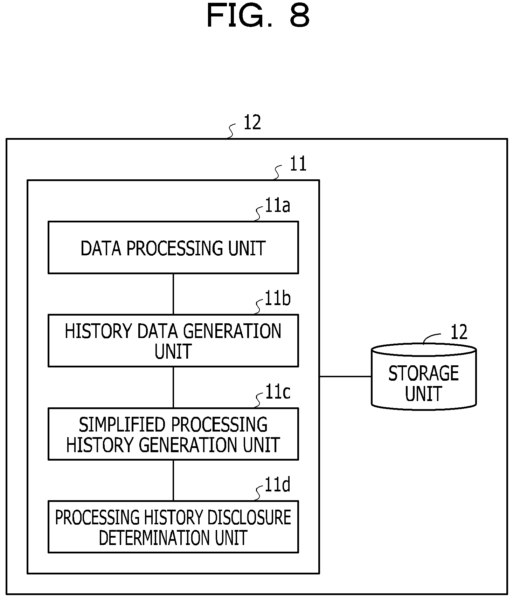

Next, a second embodiment is described. FIG. 8 is a diagram illustrating an example of functional blocks in a management apparatus. A management apparatus 10 of the second embodiment includes a control unit 11 and a storage unit 12. The control unit 11 includes a data processing unit 11a, a history data generation unit 11b, a simplified processing history generation unit 11c, and a processing history disclosure determination unit 11d.

The data processing unit 11a performs processing operation on actual data. The history data generation unit 11b generates a data history (D) and a processing history (P) as history data.

The simplified processing history generation unit 11c generates a simplified processing history for the processing history (detailed processing history) being the access restriction target, by simplifying the processing history to allow publication of the processing history. The processing history disclosure determination unit 11d determines whether a disclosure request source of the history data has access right. The processing history disclosure determination unit 11d then discloses the detailed processing history being the access restriction target to an owner of the access right and does not disclose the detailed processing history being the target of access restriction to a non-owner of the access right (the simplified processing history is allowed to be made public). The storage unit 12 holds control information relating to the entire apparatus and also holds the actual data, the history data, the simplified processing history, and the like.

### <Hardware>

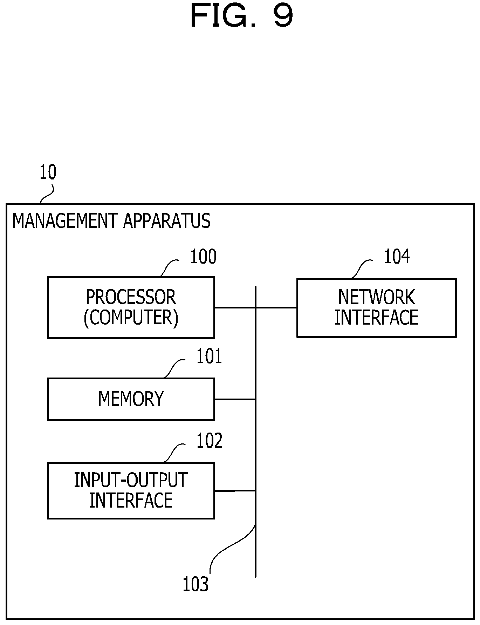

FIG. 9 is a diagram illustrating an example of hardware of the management apparatus. A processor (computer) 100 controls the entire management apparatus 10. The processor 100 implements functions of the control unit 11.

A memory 101, an input-output interface 102, and a network interface 104 are coupled to the processor 100 via a bus 103.

The processor 100 may be a multiprocessor. The processor 100 is, for example, a central processing unit (CPU), a microprocessor unit (MPU), a digital signal processor (DSP), an application-specific integrated circuit (ASIC), or a programmable logic device (PLD). The processor 100 may be a combination of two or more of a CPU, an MPU, a DSP, an ASIC, and a PLD.

The memory 101 implements functions of the storage unit 12 and is used as a main storage device of the management apparatus 10. At least part of an operating system (OS) program and application programs that are executed by the processor 100 is temporarily stored in the memory 101. The memory 101 also stores various kinds of data used in processing by the processor 100.

The memory 101 is also used as an auxiliary storage device of the management apparatus 10 and stores the OS program, the application programs, and various kinds of data. The memory 101 may include, as the auxiliary storage device, a semiconductor storage device such as a flash memory or a solid-state drive (SSD) and a magnetic recording medium such as a hard disk drive (HDD).

The peripheral devices coupled to the bus 103 include the input-output interface 102 and the network interface 104. The input-output interface 102 may be coupled to an information input device such as a keyboard or a mouse and transmits a signal sent from the information input device to the processor 100.

The input-output interface 102 also functions as a communication interface for coupling with peripheral devices. For example, an optical drive device that uses laser light or the like to read data recorded on an optical disk may be coupled to the input-output interface 102. Examples of the optical disk include a Blu-ray Disc (registered trademark), a compact disc read-only memory (CD-ROM), a CD-recordable (R)/rewritable (RW), and the like.

A memory device and a memory reader-writer may also be coupled to the input-output interface 102. The memory device is a recording medium having a function to communicate with the input-output interface 102. The memory reader-writer is a device that writes data to a memory card or reads data from the memory card. The memory card is a card-type recording medium.

The network interface 104 is coupled to a network and performs network interface control. For example, a network interface card (NIC), a wireless local area network (LAN) card, or the like may be used as the network interface 104. Data received by the network interface 104 is outputted to the memory 101 and the processor 100.

A hardware configuration as described above is capable of implementing processing functions of the management apparatus 10. For example, the management apparatus 10 may perform processing of the embodiments by causing the processor 100 to execute a predetermined program.

The management apparatus 10 implements the processing functions of the embodiments by, for example, executing a program recorded in a computer-readable recording medium. The program in which contents of processing to be executed by the management apparatus 10 are written may be recorded in various recording media.

For example, the program to be executed by the management apparatus 10 may be stored in the auxiliary storage device. The processor 100 loads at least part of the program in the auxiliary storage device onto the main storage device and executes the program.

The program may be recorded in a portable recording medium such as an optical disk, a memory device, or a memory card. The program stored in the portable recording medium is executable, for example, after being installed in the auxiliary storage device under control of the processor 100. Alternatively, the processor 100 may read the program directly from the portable recording medium and execute the program.

### <History Link That Enables Access Restriction>

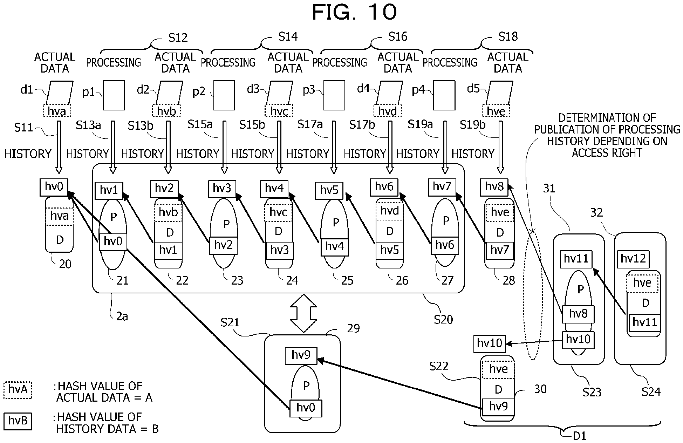

FIG. 10 is a diagram for explaining a history link that enables access restriction. Assume that there is actual data d1 and a series of processing operations is performed on the actual data d1 to generate actual data d5.

Assume that the actual data d5 is allowed to be made public. In this case, assume that, although the actual data d5 is made public, detailed processing procedures in which the actual data d5 is generated are not disclosed to a non-owner of the access right with the publication of the actual data d5. In this processing, assume that a simplified processing history obtained by simplifying the detailed processing procedures of the actual data d5 is generated and made public.

[Step S11] The control unit 11 generates a data history (D)20 of the actual data d1. In this case, the control unit 11 calculates a hash value "hva" of the actual data d1 and generates the data history (D)20 in which the hash value "hva" is stored. The control unit 11 then calculates a hash value "hv0" of the data history (D)20 and assigns the hash value "hv0" to the data history (D)20.

[Step S12] The control unit 11 generates actual data d2 by performing processing p1 on the actual data d1.

[Step S13a] The control unit 11 generates a processing history (P)21 of the processing p1. In this case, the control unit 11 generates the processing history (P)21 in which the hash value "hv0" of the data history (D)20 is stored. The control unit 11 then calculates a hash value "hv1" of the processing history (P)21 and assigns the hash value "hv1" to the processing history (P)21.

[Step S13b] The control unit 11 generates a data history (D)22 of the actual data d2. In this case, the control unit 11 calculates a hash value "hvb" of the actual data d2 and generates the data history (D)22 in which the hash value "hvb" of the actual data d2 and the hash value "hv1" of the processing history (P)21 are stored. The control unit 11 then calculates a hash value "hv2" of the data history (D)22 and assigns the hash value "hv2" to the data history (D)22.

[Step S14] The control unit 11 generates actual data d3 by performing processing p2 on the actual data d2.

[Step S15a] The control unit 11 generates a processing history (P)23 of the processing p2. In this case, the control unit 11 generates the processing history (P)23 in which the hash value "hv2" of the data history (D)22 is stored. The control unit 11 then calculates a hash value "hv3" of the processing history (P)23 and assigns the hash value "hv3" to the processing history (P)23.

[Step S15b] The control unit 11 generates a data history (D)24 of the actual data d3. In this case, the control unit 11 calculates a hash value "hvc" of the actual data d3 and generates the data history (D)24 in which the hash value "hvc" of the actual data d3 and the hash value "hv3" of the processing history (P)23 are stored. The control unit 11 then calculates a hash value "hv4" of the data history (D)24 and assigns the hash value "hv4" to the data history (D)24.

[Step S16] The control unit 11 generates actual data d4 by performing processing p3 on the actual data d3.

[Step S17a] The control unit 11 generates a processing history (P)25 of the processing p3. In this case, the control unit 11 generates the processing history (P)25 in which the hash value "hv4" of the data history (D)24 is stored. The control unit 11 then calculates a hash value "hv5" of the processing history (P)25 and assigns the hash value "hv5" to the processing history (P)25.

[Step S17b] The control unit 11 generates a data history (D)26 of the actual data d4. In this case, the control unit 11 calculates a hash value "hvd" of the actual data d4 and generates the data history (D)26 in which the hash value "hvd" of the actual data d4 and the hash value "hv5" of the processing history (P)25 are stored. The control unit 11 then calculates a hash value "hv6" of the data history (D)26 and assigns the hash value "hv6" to the data history (D)26.

[Step S18] The control unit 11 generates actual data d5 by performing processing p4 on the actual data d4.

[Step S19a] The control unit 11 generates a processing history (P)27 of the processing p4. In this case, the control unit 11 generates the processing history (P)27 in which the hash value "hv6" of the data history (D)26 is stored. The control unit 11 then calculates a hash value "hv7" of the processing history (P)27 and assigns the hash value "hv7" to the processing history (P)27.

[Step S19b] The control unit 11 generates a data history (D)28 of the actual data d5. In this case, the control unit 11 calculates a hash value "hve" of the actual data d5 and generates the data history (D)28 in which the hash value "hve" of the actual data d5 and the hash value "hv7" of the processing history (P)27 are stored. The control unit 11 then calculates a hash value "hv8" of the data history (D)28 and assigns the hash value "hv8" to the data history (D)28.

[Step S20] The control unit 11 sets a history range (detailed processing history 2a) from the processing history (P)21 to the processing history (P)27 as an access restriction target based on a user instruction.

[Step S21] The control unit 11 generates a simplified processing history (P)29 obtained by simplifying a flow of data processing in the history range from the processing history (P)21 to the processing history (P)27.

In this case, the control unit 11 generates the simplified processing history (P)29 including the hash value "hv0" of the data history (D)20, calculates a hash value "hv9" of the simplified processing history (P)29, and assigns the hash value "hv9" to the simplified processing history (P)29.

[Step S22] The control unit 11 generates a data history (D)30 in which the hash value "hve" of the actual data d5 and the hash value "hv9" of the simplified processing history (P)29 are stored. The control unit 11 then calculates a hash value "hv10" of the data history (D)30 and assigns the hash value "hv10" to the data history (D)30.

[Step S23] The control unit 11 generates a processing history (P)31 (publication processing history (P)31) in which the hash value "hv8" of the data history (D)28 and the hash value "hv10" of the data history (D)30 are stored. The control unit 11 then calculates a hash value "hv11" of the publication processing history (P)31 and assigns the hash value "hv11" to the publication processing history (P)31.

[Step S24] The control unit 11 generates a data history (D)32 (public data history (D)32) in which the hash value "hve" of the actual data d5 and the hash value "hv11" of the publication processing history (P)31 are stored. The control unit 11 then calculates a hash value "hv12" of the public data history (D)32 and assigns the hash value "hv12" to the public data history (D)32.

In the aforementioned description, since the hash value "hve" and the hash value "hv9" are stored in the data history (D)30, the data history (D)30 is generated after the generation of the data history (D)28 and the simplified processing history (P)29. Since the hash value "hv10" is stored in the publication processing history (P)31, the publication processing history (P)31 is generated after the generation of the data history (D)30. Since the hash value "hv11" is stored in the public data history (D)32, the public data history (D)32 is generated after the generation of the publication processing history (P)31.

The publication processing history (P)31 is a history of performing processing for branching to disclosure of the detailed processing history 2a as the processing history of the actual data d5 or disclosure of the simplified processing history (P)29 obtained by simplifying the detailed processing history 2a as the processing history of the actual data d5. The public data history (D)32 is a data history (D) prepared separately from the data history (D)28 of the actual data d5 in disclosure of the actual data d5.

A history data group D1 is a group of pieces of history data used to determine to which one of the detailed processing history 2a and the simplified processing history (P)29 access is to be made, and includes the data history (D)30, the publication processing history (P)31, and the public data history (D)32. The publication processing history (P)31 in the history data group D1 is history data of a branching point through which tracking-back to either the detailed processing history 2a or the simplified processing history (P)29 is possible.

In the publication of the actual data d5, the control unit 11 first accesses the public data history (D)32 in which the hash value "hve" of the actual data d5 is stored.

Since the hash value "hv11" is stored in the public data history (D)32, the control unit 11 accesses the publication processing history (P)31 to which the hash value "hv11" is assigned.

The hash values "hv8" and "hv10" are stored in the publication processing history (P)31. The control unit 11 accesses the data history (D)28 to which the hash value "hv8" is assigned, for an owner of the access right to the detailed processing history 2a of the actual data d5. The control unit 11 then extracts and discloses the detailed processing history 2a.

The control unit 11 accesses the data history (D)30 to which the hash value "hv10" is assigned, for a non-owner of the access right to the detailed processing history 2a of the actual data d5. The control unit 11 then discloses the simplified processing history (P)29 via the data history (D)30.

The control unit 11 couples the simplified processing history (P)29 for publication, associated with the non-public detailed processing history 2a with restricted access, to the data history (D)20 through a hash chain. Thus, even if the access to the detailed processing history 2a is restricted, it is possible to track back the hash chain through the simplified processing history (P)29 to a history before the detailed processing history 2a. Accordingly, it is possible to perform falsification check based on the hash chain without disclosure of the non-public detailed processing history 2a.

### <Flowchart>

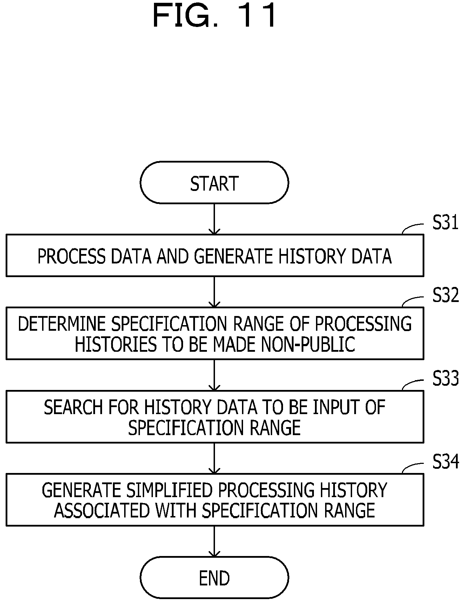

FIG. 11 is a flowchart illustrating an example of an operation of generating the simplified processing history.

[Step S31] The control unit 11 processes received data and generates history data (data history (D) and processing history (P)).

[Step S32] The control unit 11 specifies a detailed history of processing to be made non-public (processing history being the access restriction target). For example, in FIG. 10, a range from the processing history (P)21 having the hash value "hv1" to the processing history (P)27 having the hash value "hv7" is specified.

[Step S33] The control unit 11 searches for history data to be an input of the specification range. For example, in FIG. 10, the data history (D)20 with the hash value "hv0" is searched for as the history data to be an input of the specification range.

[Step S34] The control unit 11 generates the simplified processing history (P) including the hash value of the history data to be the input of the specification range. For example, in FIG. 10, the control unit 11 generates the simplified processing history (P)29 including the hash value "hv0".

As described above, when the control unit 11 generates the simplified processing history (P), the control unit 11 generates the simplified processing history (P) including the hash value of the history data to be the input of the range of the detailed processing history being the access restriction target.

This causes the simplified processing history (P) to be coupled through a hash chain to the history data before the detailed processing history 2a. Accordingly, it is possible to track back the hash chain through the simplified processing history (P)29 to a history before the detailed processing history 2a. Thus, it is possible to perform falsification check based on the hash chain without disclosure of the non-public detailed processing history 2a.

### <Another Example of Generating Simplified Processing History>

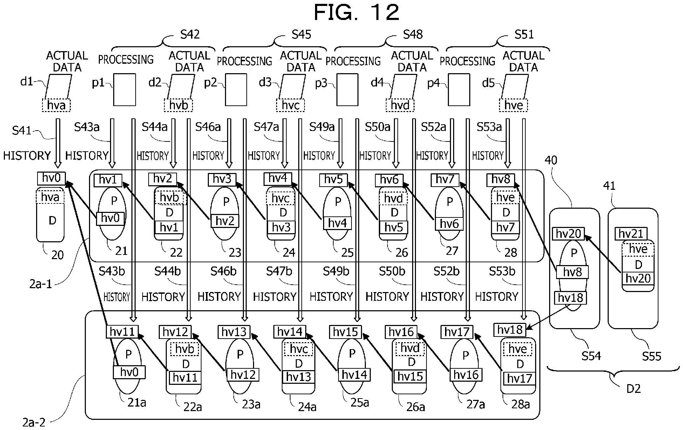

FIG. 12 is a diagram illustrating an example of generating the simplified processing history. Although the simplified processing history is generated after the generation of the detailed processing history 2a in the aforementioned example of FIG. 10, simplified processing histories may be generated for the respective processing operations, one by one.

[Step S41] The control unit 11 generates a data history (D)20 of the actual data d1. In this case, the control unit 11 calculates a hash value "hva" of the actual data d1 and generates the data history (D)20 in which the hash value "hva" is stored. The control unit 11 then calculates a hash value "hv0" of the data history (D)20 and assigns the hash value "hv0" to the data history (D)20.

[Step S42] The control unit 11 generates actual data d2 by performing processing p1 on the actual data d1.

[Step S43a] The control unit 11 generates a processing history (P)21 of the processing p1. In this case, the control unit 11 generates the processing history (P)21 in which the hash value "hv0" of the data history (D)20 is stored. The control unit 11 then calculates a hash value "hv1" of the processing history (P)21 and assigns the hash value "hv1" to the processing history (P)21.

[Step S43b] The control unit 11 generates a processing history (P)21a of the processing p1. In this case, the control unit 11 generates the processing history (P)21a in which the hash value "hv0" of the data history (D)20 is stored. The control unit 11 then calculates a hash value "hv11" of the processing history (P)21a and assigns the hash value "hv11" to the processing history (P)21a. The processing history (P)21a corresponds to a processing history obtained by simplifying the contents of the processing history (P)21.

[Step S44a] The control unit 11 generates a data history (D)22 of the actual data d2. In this case, the control unit 11 calculates a hash value "hvb" of the actual data d2 and generates the data history (D)22 in which the hash value "hvb" of the actual data d2 and the hash value "hv1" of the processing history (P)21 are stored. The control unit 11 then calculates a hash value "hv2" of the data history (D)22 and assigns the hash value "hv2" to the data history (D)22.

[Step S44b] The control unit 11 generates a data history (D)22a of the actual data d2. In this case, the control unit 11 generates the data history (D)22a in which the hash value "hvb" of the actual data d2 and the hash value "hv11" of the processing history (P)21a are stored. The control unit 11 then calculates a hash value "hv12" of the data history (D)22a and assigns the hash value "hv12" to the data history (D)22a.

[Step S45] The control unit 11 generates actual data d3 by performing processing p2 on the actual data d2.

[Step S46a] The control unit 11 generates a processing history (P)23 of the processing p2. In this case, the control unit 11 generates the processing history (P)23 in which the hash value "hv2" of the data history (D)22 is stored. The control unit 11 then calculates a hash value "hv3" of the processing history (P)23 and assigns the hash value "hv3" to the processing history (P)23.

[Step S46b] The control unit 11 generates a processing history (P)23a of the processing p2. In this case, the control unit 11 generates the processing history (P)23a in which the hash value "hv12" of the data history (D)22a is stored. The control unit 11 then calculates a hash value "hv13" of the processing history (P)23a and assigns the hash value "hv13" to the processing history (P)23a. The processing history (P)23a corresponds to a processing history obtained by simplifying the contents of the processing history (P)23.

[Step S47a] The control unit 11 generates a data history (D)24 of the actual data d3. In this case, the control unit 11 calculates a hash value "hvc" of the actual data d3 and generates the data history (D)24 in which the hash value "hvc" of the actual data d3 and the hash value "hv3" of the processing history (P)23 are stored. The control unit 11 then calculates a hash value "hv4" of the data history (D)24 and assigns the hash value "hv4" to the data history (D)24.

[Step S47b] The control unit 11 generates a data history (D)24a of the actual data d3. In this case, the control unit 11 generates the data history (D)24a in which the hash value "hvc" of the actual data d3 and the hash value "hv13" of the processing history (P)23a are stored. The control unit 11 then calculates a hash value "hv14" of the data history (D)24a and assigns the hash value "hv14" to the data history (D)24a.

[Step S48] The control unit 11 generates actual data d4 by performing processing p3 on the actual data d3.

[Step S49a] The control unit 11 generates a processing history (P)25 of the processing p3. In this case, the control unit 11 generates the processing history (P)25 in which the hash value "hv4" of the data history (D)24 is stored. The control unit 11 then calculates a hash value "hv5" of the processing history (P)25 and assigns the hash value "hv5" to the processing history (P)25.

[Step S49b] The control unit 11 generates a processing history (P)25a of the processing p3. In this case, the control unit 11 generates the processing history (P)25a in which the hash value "hv14" of the data history (D)24a is stored. The control unit 11 then calculates a hash value "hv15" of the processing history (P)25a and assigns the hash value "hv15" to the processing history (P)25a. The processing history (P)25a corresponds to a processing history obtained by simplifying the contents of the processing history (P)25.

[Step S50a] The control unit 11 generates a data history (D)26 of the actual data d4. In this case, the control unit 11 calculates a hash value "hvd" of the actual data d4 and generates the data history (D)26 in which the hash value "hvd" of the actual data d4 and the hash value "hv5" of the processing history (P)25 are stored. The control unit 11 then calculates a hash value "hv6" of the data history (D)26 and assigns the hash value "hv6" to the data history (D)26.

[Step S50b] The control unit 11 generates a data history (D)26a of the actual data d4. In this case, the control unit 11 generates the data history (D)26a in which the hash value "hvd" of the actual data d4 and the hash value "hv15" of the processing history (P)25a are stored. The control unit 11 then calculates a hash value "hv16" of the data history (D)26a and assigns the hash value "hv16" to the data history (D)26a.

[Step S51] The control unit 11 generates actual data d5 by performing processing p4 on the actual data d4.

[Step S52a] The control unit 11 generates a processing history (P)27 of the processing p4. In this case, the control unit 11 generates the processing history (P)27 in which the hash value "hv6" of the data history (D)26 is stored. The control unit 11 then calculates a hash value "hv7" of the processing history (P)27 and assigns the hash value "hv7" to the processing history (P)27.

[Step S52b] The control unit 11 generates a processing history (P)27a of the processing p4. In this case, the control unit 11 generates the processing history (P)27a in which the hash value "hv16" of the data history (D)26a is stored. The control unit 11 then calculates a hash value "hv17" of the processing history (P)27a and assigns the hash value "hv17" to the processing history (P)27a. The processing history (P)27a corresponds to a processing history obtained by simplifying the contents of the processing history (P)27.

[Step S53a] The control unit 11 generates a data history (D)28 of the actual data d5. In this case, the control unit 11 calculates a hash value "hve" of the actual data d5 and generates the data history (D)28 in which the hash value "hve" of the actual data d5 and the hash value "hv7" of the processing history (P)27 are stored. The control unit 11 then calculates a hash value "hv8" of the data history (D)28 and assigns the hash value "hv8" to the data history (D)28.

[Step S53b] The control unit 11 generates a data history (D)28a of the actual data d5. In this case, the control unit 11 generates the data history (D)28a in which the hash value "hve" of the actual data d5 and the hash value "hv17" of the processing history (P)27a are stored. The control unit 11 then calculates a hash value "hv18" of the data history (D)28a and assigns the hash value "hv18" to the data history (D)28a.

[Step S54] The control unit 11 generates a processing history (P)40 (publication processing history (P)40) in which the hash value "hv8" of the data history (D)28 and the hash value "hv18" of the data history (D)28a are stored. The control unit 11 then calculates a hash value "hv20" of the publication processing history (P)40 and assigns the hash value "hv20" to the publication processing history (P)40.

[Step S55] The control unit 11 generates a data history (D)41 (public data history (D)41) in which the hash value "hve" of the actual data d5 and the hash value "hv20" of the publication processing history (P)40 are stored. The control unit 11 then calculates a hash value "hv21" of the public data history (D)41 and assigns the hash value "hv21" to the public data history (D)41.

A history data range from the processing history (P)21 to the data history (D)28 is a detailed processing history 2a-1 being the target of access restriction and a history data range from the processing history (P)21a to the data history (D)28a is a simplified processing history 2a-2 for publication not being the target of access restriction.

A history data group D2 is a group of pieces of history data used to determine to which one of the detailed processing history 2a-1 and the simplified processing history (P)2a-2 access is to be made, and includes the publication processing history (P)40 and the public data history (D)41. The publication processing history (P)40 in the history data group D2 is a history data of a branching point through which tracking-back to either the detailed processing history 2a-1 or the simplified processing history 2a-2 is possible.

As described above, the control unit 11 generates the simplified processing histories for the respective processing operations one by one and generates the simplified processing history 2a-2 associated with the detailed processing history 2a-1 being the access restriction target. Since this allows a simplified processing history to be generated in each processing step, it is possible to flexibly generate information on the processing history that is allowed to be made public in the simplified processing history 2a-2.

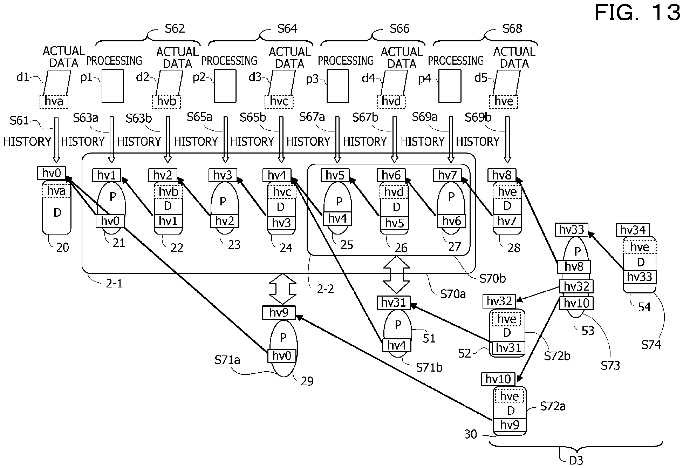

FIG. 13 is a diagram illustrating an example of generating the simplified processing history. Although one simplified processing history is generated for one detailed processing history in the aforementioned examples of FIGs. 10 and 12, multiple simplified processing histories associated with multiple ranges of detailed processing histories may be generated.

[Step S61] The control unit 11 generates a data history (D)20 of the actual data d1. In this case, the control unit 11 calculates a hash value "hva" of the actual data d1 and generates the data history (D)20 in which the hash value "hva" is stored. The control unit 11 then calculates a hash value "hv0" of the data history (D)20 and assigns the hash value "hv0" to the data history (D)20.

[Step S62] The control unit 11 generates actual data d2 by performing processing p1 on the actual data d1.

[Step S63a] The control unit 11 generates a processing history (P)21 of the processing p1. In this case, the control unit 11 generates the processing history (P)21 in which the hash value "hv0" of the data history (D)20 is stored. The control unit 11 then calculates a hash value "hv1" of the processing history (P)21 and assigns the hash value "hv1" to the processing history (P)21.

[Step S63b] The control unit 11 generates a data history (D)22 of the actual data d2. In this case, the control unit 11 calculates a hash value "hvb" of the actual data d2 and generates the data history (D)22 in which the hash value "hvb" of the actual data d2 and the hash value "hv1" of the processing history (P)21 are stored. The control unit 11 then calculates a hash value "hv2" of the data history (D)22 and assigns the hash value "hv2" to the data history (D)22.

[Step S64] The control unit 11 generates actual data d3 by performing processing p2 on the actual data d2.

[Step S65a] The control unit 11 generates a processing history (P)23 of the processing p2. In this case, the control unit 11 generates the processing history (P)23 in which the hash value "hv2" of the data history (D)22 is stored. The control unit 11 then calculates a hash value "hv3" of the processing history (P)23 and assigns the hash value "hv3" to the processing history (P)23.

[Step S65b] The control unit 11 generates a data history (D)24 of the actual data d3. In this case, the control unit 11 calculates a hash value "hvc" of the actual data d3 and generates the data history (D)24 in which the hash value "hvc" of the actual data d3 and the hash value "hv3" of the processing history (P)23 are stored. The control unit 11 then calculates a hash value "hv4" of the data history (D)24 and assigns the hash value "hv4" to the data history (D)24.

[Step S66] The control unit 11 generates actual data d4 by performing processing p3 on the actual data d3.

[Step S67a] The control unit 11 generates a processing history (P)25 of the processing p3. In this case, the control unit 11 generates the processing history (P)25 in which the hash value "hv4" of the data history (D)24 is stored. The control unit 11 then calculates a hash value "hv5" of the processing history (P)25 and assigns the hash value "hv5" to the processing history (P)25.

[Step S67b] The control unit 11 generates a data history (D)26 of the actual data d4. In this case, the control unit 11 calculates a hash value "hvd" of the actual data d4 and generates the data history (D)26 in which the hash value "hvd" of the actual data d4 and the hash value "hv5" of the processing history (P)25 are stored. The control unit 11 then calculates a hash value "hv6" of the data history (D)26 and assigns the hash value "hv6" to the data history (D)26.

[Step S68] The control unit 11 generates actual data d5 by performing processing p4 on the actual data d4.

[Step S69a] The control unit 11 generates a processing history (P)27 of the processing p4. In this case, the control unit 11 generates the processing history (P)27 in which the hash value "hv6" of the data history (D)26 is stored. The control unit 11 then calculates a hash value "hv7" of the processing history (P)27 and assigns the hash value "hv7" to the processing history (P)27.

[Step S69b] The control unit 11 generates a data history (D)28 of the actual data d5. In this case, the control unit 11 calculates a hash value "hve" of the actual data d5 and generates the data history (D)28 in which the hash value "hve" of the actual data d5 and the hash value "hv7" of the processing history (P)27 are stored. The control unit 11 then calculates a hash value "hv8" of the data history (D)28 and assigns the hash value "hv8" to the data history (D)28.

[Step S70a] The control unit 11 sets a data processing range (detailed processing history 2-1) from the processing history (P)21 to the processing history (P)27 as the access restriction target based on a user instruction.

[Step S70b] The control unit 11 sets a contained range (detailed processing history 2-2) from the processing history (P)25 to the processing history (P)27 that is contained in the detailed processing history 2-1, as the access restriction target based on a user instruction.

[Step S71a] The control unit 11 generates a simplified processing history (P)29 obtained by simplifying a flow of data processing in the non-public detailed processing history 2-1 from the processing history (P)21 to the processing history (P)27.

In this case, the control unit 11 generates the simplified processing history (P)29 including the hash value "hv0" of the data history (D)20, calculates a hash value "hv9" of the simplified processing history (P)29, and assigns the hash value "hv9" to the simplified processing history (P)29.

[Step S71b] The control unit 11 generates a simplified processing history (P)51 obtained by simplifying a flow of data processing in the non-public detailed processing history 2-2 from the processing history (P)25 to the processing history (P)27.

In this case, the control unit 11 generates the simplified processing history (P)51 including the hash value "hv4" of the data history (D)24, calculates a hash value "hv31" of the simplified processing history (P)51, and assigns the hash value "hv31" to the simplified processing history (P)51.

[Step S72a] The control unit 11 generates a data history (D)30 in which the hash value "hve" of the actual data d5 and the hash value "hv9" of the simplified processing history (P)29 are stored. The control unit 11 then calculates a hash value "hv10" of the data history (D)30 and assigns the hash value "hv10" to the data history (D)30.

[Step S72b] The control unit 11 generates a data history (D)52 in which the hash value "hve" of the actual data d5 and the hash value "hv31" of the simplified processing history (P)51 are stored. The control unit 11 then calculates a hash value "hv32" of the data history (D)52 and assigns the hash value "hv32" to the data history (D)52.

[Step S73] The control unit 11 generates a processing history (P)53 in which the hash value "hv8" of the data history (D)28, the hash value "hv32" of the data history (D)52, and the hash value "hv10" of the data history (D)30 are stored. The control unit 11 then calculates a hash value "hv33" of the processing history (P)53 and assigns the hash value "hv33" to the processing history (P)53.

[Step S74] The control unit 11 generates a data history (D)54 in which the hash value "hve" of the actual data d5 and the hash value "hv33" of the processing history (P)53 are stored. The control unit 11 then calculates a hash value "hv34" of the data history (D)54 and assigns the hash value "hv34" to the data history (D)54.

A history data group D3 is a group of pieces of history data used to determine to which one of the detailed processing history 2-1, the detailed processing history 2-2, the simplified processing history (P)29, and the simplified processing history (P)51 access is to be made, and includes the data histories (D)30, 52, and 54 and the processing history (P)53. The processing history (P)53 in the history data group D3 is a history data of a branching point through which tracking-back to any of the detailed processing history 2-1/detailed processing history 2-2, the simplified processing history (P)29, and the simplified processing history (P)51 is possible.

As described above, when multiple detailed processing histories being the access restriction targets are set, the simplified processing history is generated for each of the set detailed processing histories. This allows the content of the detailed processing history to be divided into multiple contents and form a simplified processing history for each of the contents of the divided processing history.

### <Automatic Setting of Specification Range of Access Restriction Target>

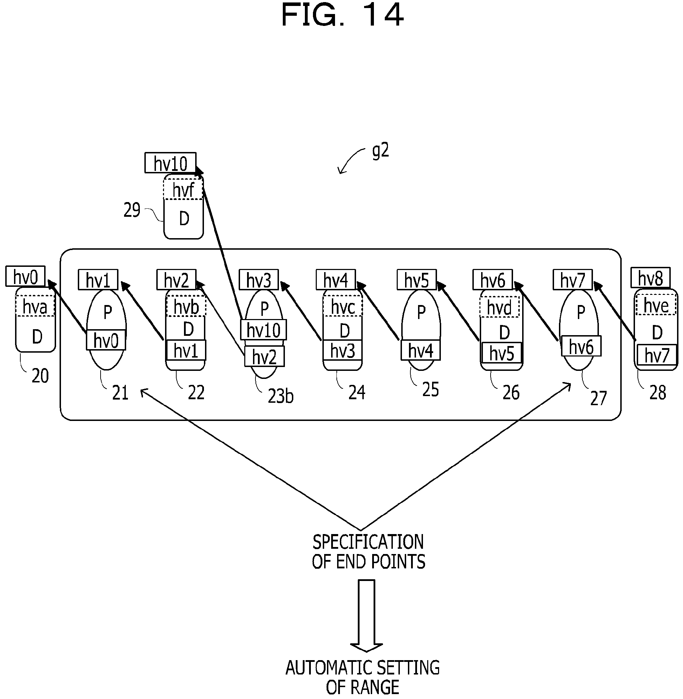

FIG. 14 is a diagram illustrating an example of automatically setting a specification range of an access restriction target. A history data graph g2 includes data histories (D)20, 22, 24, 26, 28, and 29 and processing histories (P)21, 23b, 25, and 27.

In a hash chain, the data history (D)20 and the processing history (P)21 are linked to each other through a hash value "hv0", the processing history (P)21 and the data history (D)22 are linked to each other through a hash value "hv1", and the data history (D)22 and the processing history (P)23b are linked to each other through a hash value "hv2".

The processing history (P)23b and the data history (D)24 are linked to each other through a hash value "hv3", the data history (D)24 and the processing history (P)25 are linked to each other through a hash value "hv4", and the processing history (P)25 and the data history (D)26 are linked to each other through a hash value "hv5".

The data history (D)26 and the processing history (P)27 are linked to each other through a hash value "hv6" and the processing history (P)27 and the data history (D)28 are linked to each other through a hash value "hv7". The data history (D)29 and the processing history (P)23b are linked to each other through a hash value "hv10".

When a range for which the simplified processing history is desired to be generated is to be specified in the history data graph g2, the control unit 11 automatically sets the specification range by specifying pieces of history data that are to be two end points of an input end point and an output end point in the range.

In the example of FIG. 14, when the control unit 11 generates the simplified processing history (P) for a range from the processing history (P)21 to the processing history (P)27, the control unit 11 specifies the processing history (P)21 to which the hash value "hv1" is assigned and the processing history (P)27 to which the hash value "hv7" is assigned to determine the range in one operation.

Since the control unit 11 automatically sets the specification range by specifying pieces of history data that are to be the two end points of the input end point and the output end point in the range desired to be specified, the range specification may be performed without an operation of specifying pieces of history data one by one and it is possible efficiently specify the range for which the simplified processing history is desired to be generated.

### <Modified Example>

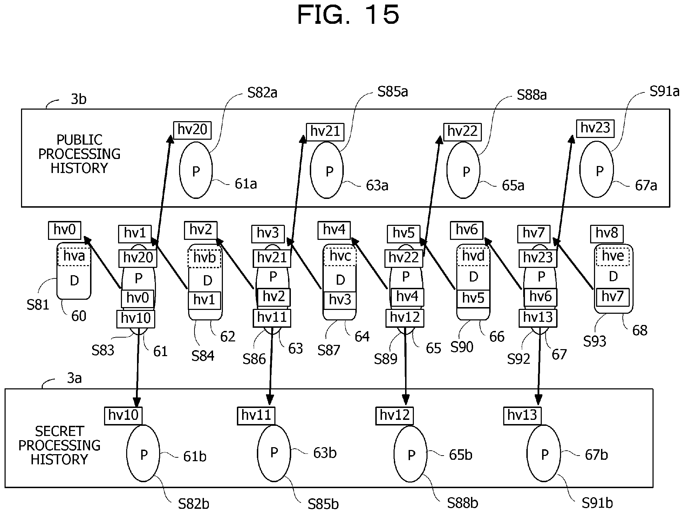

FIG. 15 is a diagram for explaining a modified example of history generation that enables access restriction. In the modified example, a secret processing history 3a being the access restriction target and a public processing history 3b for publication are generated for each processing history (P).

[Step S81] The control unit 11 generates a data history (D)60 in which a hash value "hva" of actual data is stored. The control unit 11 also calculates a hash value "hv0" of the data history (D)60 and assigns the hash value "hv0" to the data history (D)60.

[Step S82a] The control unit 11 generates a public processing history (P)61a that is allowed to be made public, as a processing history of the actual data having the hash value "hva". The control unit 11 also calculates a hash value "hv20" of the public processing history (P)61a and assigns the hash value "hv20" to the public processing history (P)61a.

[Step S82b] The control unit 11 generates a secret processing history (P)61b being the access restriction target, as a processing history of the actual data having the hash value "hva". The control unit 11 also calculates a hash value "hv10" of the secret processing history (P)61b and assigns the hash value "hv10" to the secret processing history (P)61b.

[Step S83] The control unit 11 generates a processing history (P)61 of the actual data having the hash value "hva". In this case, the control unit 11 generates the processing history (P)61 in which the hash value "hv0" of the data history (D)60, the hash value "hv20" of the public processing history (P)61a, and the hash value "hv10" of the secret processing history (P)61b are stored. The control unit 11 then calculates a hash value "hv1" of the processing history (P)61 and assigns the hash value "hv1" to the processing history (P)61.

[Step S84] The control unit 11 generates a data history (D)62 in which a hash value "hvb" of actual data and the hash value "hv1" of the processing history (P)61 are stored. The control unit 11 also calculates a hash value "hv2" of the data history (D)62 and assigns the hash value "hv2" to the data history (D)62.

[Step S85a] The control unit 11 generates a public processing history (P)63a that is allowed to be made public, as a processing history of the actual data having the hash value "hvb". The control unit 11 also calculates a hash value "hv21" of the public processing history (P)63a and assigns the hash value "hv21" to the public processing history (P)63a.

[Step S85b] The control unit 11 generates a secret processing history (P)63b being the access restriction target, as a processing history of the actual data having the hash value "hvb". The control unit 11 also calculates a hash value "hv11" of the secret processing history (P)63b and assigns the hash value "hv11" to the secret processing history (P)63b.

[Step S86] The control unit 11 generates a processing history (P)63 of the actual data having the hash value "hvb". In this case, the control unit 11 generates the processing history (P)63 in which the hash value "hv2" of the data history (D)62, the hash value "hv21" of the public processing history (P)63a, and the hash value "hv11" of the secret processing history (P)63b are stored. The control unit 11 then calculates a hash value "hv3" of the processing history (P)63 and assigns the hash value "hv3" to the processing history (P)63.

[Step S87] The control unit 11 generates a data history (D)64 in which a hash value "hvc" of actual data and the hash value "hv3" of the processing history (P)63 are stored. The control unit 11 also calculates a hash value "hv4" of the data history (D)64 and assigns the hash value "hv4" to the data history (D)64.

[Step S88a] The control unit 11 generates a public processing history (P)65a that is allowed to be made public, as a processing history of the actual data having the hash value "hvc". The control unit 11 also calculates a hash value "hv22" of the public processing history (P)65a and assigns the hash value "hv22" to the public processing history (P)65a.

[Step S88b] The control unit 11 generates a secret processing history (P)65b being the access restriction target, as a processing history of the actual data having the hash value "hvc". The control unit 11 also calculates a hash value "hv12" of the secret processing history (P)65b and assigns the hash value "hv12" to the secret processing history (P)65b.

[Step S89] The control unit 11 generates a processing history (P)65 of the actual data having the hash value "hvc". In this case, the control unit 11 generates the processing history (P)65 in which the hash value "hv4" of the data history (D)64, the hash value "hv22" of the public processing history (P)65a, and the hash value "hv12" of the secret processing history (P)65b are stored. The control unit 11 then calculates a hash value "hv5" of the processing history (P)65 and assigns the hash value "hv5" to the processing history (P)65.

[Step S90] The control unit 11 generates a data history (D)66 in which a hash value "hvd" of actual data and the hash value "hv5" of the processing history (P)65 are stored. The control unit 11 also calculates a hash value "hv6" of the data history (D)66 and assigns the hash value "hv6" to the data history (D)66.

[Step S91a] The control unit 11 generates a public processing history (P)67a that is allowed to be made public, as a processing history of the actual data having the hash value "hvd". The control unit 11 also calculates a hash value "hv23" of the public processing history (P)67a and assigns the hash value "hv23" to the public processing history (P)67a.

[Step S91b] The control unit 11 generates a secret processing history (P)67b being the access restriction target, as a processing history of the actual data having the hash value "hvd". The control unit 11 also calculates a hash value "hv13" of the secret processing history (P)67b and assigns the hash value "hv13" to the secret processing history (P)67b.

[Step S92] The control unit 11 generates a processing history (P)67 of the actual data having the hash value "hvd". In this case, the control unit 11 generates the processing history (P)67 in which the hash value "hv6" of the data history (D)66, the hash value "hv23" of the public processing history (P)67a, and the hash value "hv13" of the secret processing history (P)67b are stored. The control unit 11 then calculates a hash value "hv7" of the processing history (P)67 and assigns the hash value "hv7" to the processing history (P)67.

[Step S93] The control unit 11 generates a data history (D)68 in which a hash value "hve" of actual data and the hash value "hv7" of the processing history (P)67 are stored. The control unit 11 also calculates a hash value "hv8" of the data history (D)68 and assigns the hash value "hv8" to the data history (D)68.

As described above, in the modified example, a secret processing history that includes processing information being the target of access restriction and a public processing history that includes processing information not being the target of the access restriction and allowed to be made public are generated for each of processing histories included in a data processing sequence. This enables reference of the processing history for publication and the processing history being the access restriction target for each processing history. Since the public processing history and the secret processing history are coupled to the data processing sequence through a hash chain, falsification check is possible.

As described above, the embodiments may provide a processing history that is checkable as a hash chain without revealing details of the processing history. The present disclosure also has the following effects.
**·** A portion of the history made public enables check of whether there is no falsification.
**·** Tracking back of the public histories enables tracking-back to all histories excluding non-public portions.
**·** It is possible to guarantee that there is no falsity in the non-public history at a point where details of the non-public history are made public.
**·** It is possible to associate the non-public history and the public history to each other.
**·** It is possible to assume that the non-public history is a history associated with the public history (for example, a simplified form) even when the non-public history remains non-public.

The aforementioned management apparatus of the embodiments may be achieved by a computer (information processing apparatus). In this case, a program is provided that describes processing contents of functions to be included in the management apparatus. Executing this program with a computer implements the processing functions described above on the computer.

The program that describes the processing contents may be recorded on a computer-readable recording medium. Examples of the computer-readable recording medium include a magnetic storage unit, an optical disk, a magneto-optical recording medium, a semiconductor memory, and the like. Examples of the magnetic storage unit include a hard disk drive (HDD), a flexible disk (FD), a magnetic tape, and the like. Examples of the optical disk include a CD-ROM/RW and the like. Examples of the magneto-optical recording medium include a magneto-optical (MO) disk and the like.

When a program is to be distributed, for example, portable recording media such as CD-ROMs on which the program is recorded are sold. The program may be stored in a storage unit of a server computer and transferred from the server computer to another computer via a network.

For example, the computer executing a program stores, in its storage unit, a program recorded on the portable recording medium or a program transferred from the server computer. The computer then reads the program from its storage unit and executes processing according to the program. The computer may also read the program directly from the portable recording medium and execute processing according to the program.

Each time a program is transferred from a server computer coupled via a network to a computer, the computer may execute processing according to the received program. At least some of the processing functions described above may be achieved by an electronic circuit such as a DSP, an ASIC, or a PLD.

## Claims

1. A management program that causes a computer to execute a process, the process comprising:
generating (s1) a data processing sequence (ch1) in which a plurality of processing histories including processing contents of data are linked by chain coupling;
setting (s2) a first data processing range (H1) comprising a first processing history (2), to which access is restricted, in the data processing sequence (ch1);
generating (s3) a second processing history (4) that is associated with the first processing history (2) by extracting information, to which access is not restricted, from the first processing history (2);
chain-coupling (s4) a second data processing range (H2) comprising the second processing history (4) to the data processing sequence (ch1);
generating (s5) a third processing history (5) that is chain-coupled to the first data processing range (H1) and the second data processing range (H2);
disclosing a first data chain that passes the first data processing range (H1) to an owner of an access right to the first processing history (2), wherein the first data chain extends from the third processing history (5) to a presence history (1) comprising properties of data that is an input of the first processing history (2) and the first data chain comprises the first processing history (2); and
disclosing a second data chain that passes the second data processing range (H2) without passing the first data processing range (H1) to a non-owner of the access right, wherein the second data chain extends from the third processing history (5) to the presence history (1) and the second data chain comprises the second processing history (4) .

2. The management program according to claim 1, the process further comprising:
coupling unique values calculated from the processing histories and unique values calculated from presence histories that comprise properties of data to one another to generate the data processing sequence (ch1) in which the processing histories and the presence histories are linked to one another; and
including, in the second processing history (4), the unique value of the presence history that is the input of the first processing history (2) to chain-couple the second processing history (4) to the data processing sequence (ch1).

3. The management program according to claim 1, the process further comprising:
generating a first presence history including a property of first data to assign a first unique value of the first presence history to the first presence history;
performing processing on the first data to generate second data;
generating, as a history of the processing, the first processing history (2) in which the first unique value is stored;
assigning a second unique value of the first processing history to the first processing history (2);
generating a second presence history in which the second unique value is stored and which includes a property of the second data;
assigning a third unique value of the second presence history to the second presence history;
setting the first processing history (2) as information to which access is restricted;
generating the second processing history (4) in which the first unique value is stored and which is associated with the first processing history (2); and
assigning a fourth unique value of the second processing history to the second processing history (4).

4. The management program according to claim 3, the process further comprising:
generating a third presence history in which a fifth unique value of the second data and the fourth unique value are stored;
assigning a sixth unique value of the third presence history to the third presence history;
generating the third processing history (5) in which the third unique value and the sixth unique value are stored;
assigning a seventh unique value of the third processing history to the third processing history (5);
generating a fourth presence history in which the fifth unique value and the seventh unique value are stored; and
assigning an eighth unique value of the fourth presence history to the fourth presence history.

5. The management program according to claim 4, the process further comprising:
selecting, when allowing access to the first processing history (2), a link coupled to the second presence history based on the third unique value stored in the third processing history (5); and
selecting, when disclosing the second processing history (4), a link coupled to the third presence history based on the sixth unique value stored in the third processing history (5).

6. The management program according to claim 1, the process further comprising:
setting a contained range contained in the first data processing range including the first processing history (2) ;
generating a fifth processing history to which access is not restricted and which is associated with a fourth processing history to which access is restricted, the fourth processing history being included in the contained range;
chain-coupling the fifth processing history to the data processing sequence; and
generating a sixth processing history that is chain-coupled to the first processing history (2), the second processing history (4), and the fifth processing history.

7. The management program according to claim 2, the process further comprising:
specifying one of the presence histories or one of the processing histories located at a first end point in the data processing sequence (ch1);
specifying one of the presence histories or one of the processing histories located at a second end point in the data processing sequence (ch1); and
setting a range between the first end point and the second end point as a data processing range including the first processing history (2).

8. A management apparatus (1a), comprising:
a storage unit (la2); and
a control unit (1a1) coupled to the storage unit (la2) and the control unit (1a1) configured to:
generate a data processing sequence (ch1) in which a plurality of processing histories including processing contents of data are linked by chain coupling;
set a first data processing range (H1) comprising a first processing history (2), to which access is restricted, in the data processing sequence (ch1);
generate a second processing history (4) that is associated with the first processing history (2) by extracting information, to which access is not restricted, from the first processing history (2);
chain-couple a second data processing range (H2) comprising the second processing history (4) to the data processing sequence (ch1);
generate a third processing history (5) that is chain-coupled to the first data processing range (H1) and the second data processing range (H2);
disclose a first data chain that passes the first data processing range (H1) to an owner of an access right to the first processing history (2), wherein the first data chain extends from the third processing history (5) to a presence history (1) comprising properties of data that is an input of the first processing history (2) and the first data chain comprises the first processing history (2); and
disclose a second data chain that passes the second data processing range (H2) without passing the first data processing range (H1) to a non-owner of the access right, wherein the second data chain extends from the third processing history (5) to the presence history (1) and the second data chain comprises the second processing history (4).

9. A management method, comprising:
generating (s1), by a computer, a data processing sequence (ch1) in which a plurality of processing histories including processing contents of data are linked by chain coupling;
setting (s2) a first data processing range (H1) comprising a first processing history (2), to which access is restricted, in the data processing sequence (ch1);
generating (s3) a second processing history (4) that is associated with the first processing history (2) by extracting information, to which access is not restricted, from the first processing history (2);
chain-coupling (s4) a second data processing range (H2) comprising the second processing history (4) to the data processing sequence (ch1);
generating (s1) a third processing history (5) that is chain-coupled to the first data processing range (H1) and the second data processing range (H2);
disclosing a first data chain that passes the first data processing range (H1) to an owner of an access right to the first processing history (2), wherein the first data chain extends from the third processing history (5) to a presence history (1) comprising properties of data that is an input of the first processing history (2) and the first data chain comprises the first processing history (2); and
disclosing a second data chain that passes the second data processing range (H2) without passing the first data processing range (H1) to a non-owner of the access right, wherein the second data chain extends from the third processing history (5) to the presence history (1) and the second data chain comprises the second processing history (4) .

## Patentansprüche

1. Verwaltungsprogramm, das einen Computer veranlasst, einen Prozess auszuführen, wobei der Prozess Folgendes umfasst:
Erzeugen (s1) einer Datenverarbeitungssequenz (ch1), in der eine Vielzahl von Verarbeitungshistorien einschließlich Verarbeitungsinhalten von Daten durch Kettenkopplung verbunden sind;
Einstellen (s2) eines ersten Datenverarbeitungsbereichs (H1), der eine erste Verarbeitungshistorie (2) umfasst, auf die der Zugriff beschränkt ist, in der Datenverarbeitungssequenz (ch1);
Erzeugen (s3) einer zweiten Verarbeitungshistorie (4), die der ersten Verarbeitungshistorie (2) zugeordnet ist, indem Informationen, auf die der Zugriff nicht beschränkt ist, aus der ersten Verarbeitungshistorie (2) extrahiert werden;
Kettenkoppeln (s4) eines zweiten Datenverarbeitungsbereichs (H2), der die zweite Verarbeitungshistorie (4) umfasst, mit der Datenverarbeitungssequenz (ch1);
Erzeugen (s5) einer dritten Verarbeitungshistorie (5), die mit dem ersten Datenverarbeitungsbereich (H1) und dem zweiten Datenverarbeitungsbereich (H2) kettengekoppelt ist;
Offenlegen einer ersten Datenkette, die den ersten Datenverarbeitungsbereich (H1) an einen Inhaber eines Zugriffsrechts auf die erste Verarbeitungshistorie (2) weitergibt, wobei sich die erste Datenkette von der dritten Verarbeitungshistorie (5) zu einer Präsenzhistorie (1) erstreckt, die Eigenschaften von Daten umfasst, die eine Eingabe der ersten Verarbeitungshistorie (2) sind, und die erste Datenkette die erste Verarbeitungshistorie (2) umfasst; und
Offenlegen einer zweiten Datenkette, die den zweiten Datenverarbeitungsbereich (H2) weitergibt, ohne den ersten Datenverarbeitungsbereich (H1) an einen Nicht-Inhaber des Zugriffsrechts weiterzugeben, wobei sich die zweite Datenkette von der dritten Verarbeitungshistorie (5) bis zur Präsenzhistorie (1) erstreckt und die zweite Datenkette die zweite Verarbeitungshistorie (4) umfasst.

2. Verwaltungsprogramm nach Anspruch 1, wobei der Prozess weiter Folgendes umfasst:
Koppeln eindeutiger Werte, die aus den Verarbeitungshistorien berechnet werden, und eindeutiger Werte, die aus Präsenzhistorien berechnet werden, die Eigenschaften von Daten umfassen, miteinander, um die Datenverarbeitungssequenz (ch1) zu erzeugen, in der die Verarbeitungshistorien und die Präsenzhistorien miteinander verknüpft sind; und
Einschließen, in der zweiten Verarbeitungshistorie (4), des eindeutigen Wertes der Präsenzhistorie, die die Eingabe der ersten Verarbeitungshistorie (2) ist, um die zweite Verarbeitungshistorie (4) mit der Datenverarbeitungssequenz (ch1) kettenzukoppeln.

3. Verwaltungsprogramm nach Anspruch 1, wobei der Prozess weiter Folgendes umfasst:
Erzeugen einer ersten Präsenzhistorie einschließlich einer Eigenschaft von ersten Daten, um der ersten Präsenzhistorie einen ersten eindeutigen Wert der ersten Präsenzhistorie zuzuordnen;
Durchführen der Verarbeitung der ersten Daten, um zweite Daten zu erzeugen;
Erzeugen, als eine Historie der Verarbeitung, der ersten Verarbeitungshistorie (2), in der der erste eindeutige Wert gespeichert ist;
Zuordnen eines zweiten eindeutigen Wertes der ersten Verarbeitungshistorie zu der ersten Verarbeitungshistorie (2);
Erzeugen einer zweiten Präsenzhistorie, in der der zweite eindeutige Wert gespeichert ist und die eine Eigenschaft der zweiten Daten einschließt;
Zuordnen eines dritten eindeutigen Wertes der zweiten Präsenzhistorie zu der zweiten Präsenzhistorie;
Einstellen der ersten Verarbeitungshistorie (2) als Information, auf die der Zugriff beschränkt ist;
Erzeugen der zweiten Verarbeitungshistorie (4), in der der erste eindeutige Wert gespeichert ist und die mit der ersten Verarbeitungshistorie (2) verknüpft ist; und
Zuordnen eines vierten eindeutigen Wertes der zweiten Verarbeitungshistorie zu der zweiten Verarbeitungshistorie (4).

4. Verwaltungsprogramm nach Anspruch 3, wobei der Prozess weiter Folgendes umfasst:
Erzeugen einer dritten Präsenzhistorie, in der ein fünfter eindeutiger Wert der zweiten Daten und der vierte eindeutige Wert gespeichert sind;
Zuordnen eines sechsten eindeutigen Wertes der dritten Präsenzhistorie zu der dritten Präsenzhistorie;
Erzeugen der dritten Verarbeitungshistorie (5), in der der dritte eindeutige Wert und der sechste eindeutige Wert gespeichert sind;
Zuordnen eines siebten eindeutigen Wertes der dritten Verarbeitungshistorie zu der dritten Verarbeitungshistorie (5);
Erzeugen einer vierten Präsenzhistorie, in der der fünfte eindeutige Wert und der siebte eindeutige Wert gespeichert sind; und
Zuordnen eines achten eindeutigen Wertes der vierten Präsenzhistorie zu der vierten Präsenzhistorie.

5. Verwaltungsprogramm nach Anspruch 4, wobei der Prozess weiter Folgendes umfasst:
Auswählen, wenn der Zugriff auf die erste Verarbeitungshistorie (2) erlaubt wird, einer mit der zweiten Präsenzhistorie gekoppelten Verknüpfung auf der Grundlage des dritten eindeutigen Wertes, der in der dritten Verarbeitungshistorie (5) gespeichert ist; und
Auswählen, wenn die zweite Verarbeitungshistorie (4) offengelegt wird, einer Verknüpfung, die mit der dritten Präsenzhistorie gekoppelt ist, basierend auf dem sechsten eindeutigen Wert, der in der dritten Verarbeitungshistorie (5) gespeichert ist.

6. Verwaltungsprogramm nach Anspruch 1, wobei der Prozess weiter Folgendes umfasst:
Einstellen eines im ersten Datenverarbeitungsbereich enthaltenen Bereichs einschließlich der ersten Verarbeitungshistorie (2);
Erzeugen einer fünften Verarbeitungshistorie, auf die der Zugriff nicht beschränkt ist und die mit einer vierten Verarbeitungshistorie verbunden ist, auf die der Zugriff beschränkt ist, wobei die vierte Verarbeitungshistorie in dem enthaltenen Bereich eingeschlossen ist;
Kettenkoppeln der fünften Verarbeitungshistorie mit der Datenverarbeitungssequenz; und
Erzeugen einer sechsten Verarbeitungshistorie, die mit der ersten Verarbeitungshistorie (2), der zweiten Verarbeitungshistorie (4) und der fünften Verarbeitungshistorie kettengekoppelt ist.

7. Verwaltungsprogramm nach Anspruch 2, wobei der Prozess weiter Folgendes umfasst:
Spezifizieren einer der Präsenzhistorien oder einer der Verarbeitungshistorien, die sich an einem ersten Endpunkt in der Datenverarbeitungssequenz (ch1) befinden;
Spezifizieren einer der Präsenzhistorien oder einer der Verarbeitungshistorien, die sich an einem zweiten Endpunkt in der Datenverarbeitungssequenz (ch1) befinden; und
Einstellen eines Bereichs zwischen dem ersten Endpunkt und dem zweiten Endpunkt als ein Datenverarbeitungsbereich einschließlich der ersten Verarbeitungshistorie (2).

8. Verwaltungsvorrichtung (1a), umfassend:
eine Speichereinheit (1a2); und
eine Steuereinheit (1a1), die mit der Speichereinheit (1a2) gekoppelt ist, und die Steuereinheit (1a1), die ausgebildet ist zum:
Erzeugen einer Datenverarbeitungssequenz (ch1), in der eine Vielzahl von Verarbeitungshistorien einschließlich Verarbeitungsinhalten von Daten durch Kettenkopplung verbunden sind;
Einstellen eines ersten Datenverarbeitungsbereichs (H1), der eine erste Verarbeitungshistorie (2) umfasst, auf die der Zugriff beschränkt ist, in der Datenverarbeitungssequenz (ch1);
Erzeugen einer zweiten Verarbeitungshistorie (4), die der ersten Verarbeitungshistorie (2) zugeordnet ist, indem Informationen, auf die der Zugriff nicht beschränkt ist, aus der ersten Verarbeitungshistorie (2) extrahiert werden;
Kettenkoppeln eines zweiten Datenverarbeitungsbereichs (H2), der die zweite Verarbeitungshistorie (4) umfasst, mit der Datenverarbeitungssequenz (ch1);
Erzeugen einer dritten Verarbeitungshistorie (5), die mit dem ersten Datenverarbeitungsbereich (H1) und dem zweiten Datenverarbeitungsbereich (H2) kettengekoppelt ist;
Offenlegen einer ersten Datenkette, die den ersten Datenverarbeitungsbereich (H1) an einen Inhaber eines Zugriffsrechts auf die erste Verarbeitungshistorie (2) weitergibt, wobei sich die erste Datenkette von der dritten Verarbeitungshistorie (5) zu einer Präsenzhistorie (1) erstreckt, die Eigenschaften von Daten umfasst, die eine Eingabe der ersten Verarbeitungshistorie (2) sind, und die erste Datenkette die erste Verarbeitungshistorie (2) umfasst; und
Offenlegen einer zweiten Datenkette, die den zweiten Datenverarbeitungsbereich (H2) weitergibt, ohne den ersten Datenverarbeitungsbereich (H1) an einen Nicht-Inhaber des Zugriffsrechts weiterzugeben, wobei sich die zweite Datenkette von der dritten Verarbeitungshistorie (5) bis zur Präsenzhistorie (1) erstreckt und die zweite Datenkette die zweite Verarbeitungshistorie (4) umfasst.

9. Verwaltungsverfahren, umfassend:
Erzeugen (s1), durch einen Computer, einer Datenverarbeitungssequenz (ch1), in der eine Vielzahl von Verarbeitungshistorien einschließlich Verarbeitungsinhalten von Daten durch Kettenkopplung verbunden sind;
Einstellen (s2) eines ersten Datenverarbeitungsbereichs (H1), der eine erste Verarbeitungshistorie (2) umfasst, auf die der Zugriff beschränkt ist, in der Datenverarbeitungssequenz (ch1);
Erzeugen (s3) einer zweiten Verarbeitungshistorie (4), die der ersten Verarbeitungshistorie (2) zugeordnet ist, indem Informationen, auf die der Zugriff nicht beschränkt ist, aus der ersten Verarbeitungshistorie (2) extrahiert werden;
Kettenkoppeln (s4) eines zweiten Datenverarbeitungsbereichs (H2), der die zweite Verarbeitungshistorie (4) umfasst, mit der Datenverarbeitungssequenz (ch1);
Erzeugen (s1) einer dritten Verarbeitungshistorie (5), die mit dem ersten Datenverarbeitungsbereich (H1) und dem zweiten Datenverarbeitungsbereich (H2) kettengekoppelt ist;
Offenlegen einer ersten Datenkette, die den ersten Datenverarbeitungsbereich (H1) an einen Inhaber eines Zugriffsrechts auf die erste Verarbeitungshistorie (2) weitergibt, wobei sich die erste Datenkette von der dritten Verarbeitungshistorie (5) zu einer Präsenzhistorie (1) erstreckt, die Eigenschaften von Daten umfasst, die eine Eingabe der ersten Verarbeitungshistorie (2) sind, und die erste Datenkette die erste Verarbeitungshistorie (2) umfasst; und
Offenlegen einer zweiten Datenkette, die den zweiten Datenverarbeitungsbereich (H2) weitergibt, ohne den ersten Datenverarbeitungsbereich (H1) an einen Nicht-Inhaber des Zugriffsrechts weiterzugeben, wobei sich die zweite Datenkette von der dritten Verarbeitungshistorie (5) bis zur Präsenzhistorie (1) erstreckt und die zweite Datenkette die zweite Verarbeitungshistorie (4) umfasst.

## Revendications

1. Programme de gestion qui amène un ordinateur à mettre en oeuvre un processus, le processus comprenant :
une génération (s1) d'une séquence de traitement de données (ch1) dans laquelle une pluralité d'historiques de traitement incluant des contenus de traitement de données sont liés par un couplage par chaîne ;
un réglage (s2) d'une première plage de traitement de données (H1) comprenant un premier historique de traitement (2), auquel l'accès est limité, dans la séquence de traitement de données (ch1) ;
une génération (s3) d'un deuxième historique de traitement (4) qui est associé au premier historique de traitement (2) en extrayant des informations, auquel l'accès n'est pas limité, à partir du premier historique de traitement (2) ;
un couplage par chaîne (s4) d'une deuxième plage de traitement de données (H2) comprenant le deuxième historique de traitement (4) à la séquence de traitement de données (ch1) ;
une génération (s5) d'un troisième historique de traitement (5) qui est couplé par chaîne à la première plage de traitement de données (H1) et à la deuxième plage de traitement de données (H2) ;
une divulgation d'une première chaîne de données qui fait passer la première plage de traitement de données (H1) à un détenteur d'un droit d'accès au premier historique de traitement (2), dans lequel la première chaîne de données s'étend du troisième historique de traitement (5) à un historique de présence (1) comprenant des propriétés de données qui sont une entrée du premier historique de traitement (2) et la première chaîne de données comprend le premier historique de traitement (2) ; et
une divulgation d'une deuxième chaîne de données qui fait passer la deuxième plage de traitement de données (H2) sans faire passer la première plage de traitement de données (H1) à un non-détenteur du droit d'accès, dans lequel la deuxième chaîne de données s'étend du troisième historique de traitement (5) à l'historique de présence (1) et la deuxième chaîne de données comprend le deuxième historique de traitement (4).

2. Programme de gestion selon la revendication 1, le processus comprenant en outre :
un couplage, les unes aux autres, de valeurs uniques calculées à partir des historiques de traitement et de valeurs uniques calculées à partir des historiques de présence qui comprennent des propriétés de données afin de générer la séquence de traitement de données (ch1) dans laquelle les historiques de traitement et les historiques de présence sont liés les uns aux autres ; et
incluant, dans le deuxième historique de traitement (4), la valeur unique de l'historique de présence qui est l'entrée du premier historique de traitement (2) pour coupler par chaîne le deuxième historique de traitement (4) à la séquence de traitement de données (ch1).

3. Programme de gestion selon la revendication 1, le processus comprenant en outre :
une génération d'un premier historique de présence incluant une propriété de premières données pour attribuer une première valeur unique du premier historique de présence au premier historique de présence ;
une mise en oeuvre d'un traitement sur les premières données pour générer des deuxièmes données ;
une génération, en tant qu'historique du traitement, du premier historique de traitement (2) dans lequel est stockée la première valeur unique ;
une attribution d'une deuxième valeur unique du premier historique de traitement au premier historique de traitement (2) ;
une génération d'un deuxième historique de présence dans lequel est stockée la deuxième valeur unique et qui inclut une propriété des deuxièmes données ;
une attribution d'une troisième valeur unique du deuxième historique de présence au deuxième historique de présence ;
un réglage du premier historique de traitement (2) en tant qu'informations auxquelles l'accès est limité ;
une génération du deuxième historique de traitement (4) dans lequel est stockée la première valeur unique et qui est associé au premier historique de traitement (2) ; et
une attribution d'une quatrième valeur unique du deuxième historique de traitement au deuxième historique de traitement (4).

4. Programme de gestion selon la revendication 3, le processus comprenant en outre :
une génération d'un troisième historique de présence dans lequel une cinquième valeur unique des deuxièmes données et la quatrième valeur unique sont stockées ;
une attribution d'une sixième valeur unique du troisième historique de présence au troisième historique de présence ;
une génération du troisième historique de traitement (5) dans lequel sont stockées la troisième valeur unique et la sixième valeur unique ;
une attribution d'une septième valeur unique du troisième historique de traitement au troisième historique de traitement (5) ;
une génération d'un quatrième historique de présence dans lequel sont stockées la cinquième valeur unique et la septième valeur unique ; et
une attribution d'une huitième valeur unique du quatrième historique de présence au quatrième historique de présence.

5. Programme de gestion selon la revendication 4, le processus comprenant en outre :
une sélection, lors de l'autorisation de l'accès au premier historique de traitement (2), d'une liaison couplée au deuxième historique de présence sur la base de la troisième valeur unique stockée dans le troisième historique de traitement (5) ; et
une sélection, lors de la divulgation du deuxième historique de traitement (4), d'une liaison couplée au troisième historique de présence sur la base de la sixième valeur unique stockée dans le troisième historique de traitement (5).

6. Programme de gestion selon la revendication 1, le processus comprenant en outre :
un réglage d'une plage contenue qui est contenue dans la première plage de traitement de données incluant le premier historique de traitement (2) ;
une génération d'un cinquième historique de traitement auquel l'accès n'est pas limité et qui est associé à un quatrième historique de traitement auquel l'accès est limité, le quatrième historique de traitement étant inclus dans la plage contenue ;
un couplage par chaîne du cinquième historique de traitement à la séquence de traitement de données ; et
une génération d'un sixième historique de traitement qui est couplé par chaîne au premier historique de traitement (2), au deuxième historique de traitement (4) et au cinquième historique de traitement.

7. Programme de gestion selon la revendication 2, le processus comprenant en outre :
une spécification de l'un des historiques de présence ou de l'un des historiques de traitement situés au niveau d'un premier point d'extrémité dans la séquence de traitement de données (ch1) ;
une spécification de l'un des historiques de présence ou de l'un des historiques de traitement situés au niveau d'un deuxième point d'extrémité dans la séquence de traitement de données (ch1) ; et
un réglage d'une plage entre le premier point d'extrémité et le deuxième point d'extrémité en tant que plage de traitement de données incluant le premier historique de traitement (2).

8. Appareil (1a) de gestion, comprenant :
une unité de stockage (1a2) ; et
une unité de commande (1a1) couplée à l'unité de stockage (1a2) et l'unité de commande (1a1) étant configurée pour :
générer une séquence de traitement de données (ch1) dans laquelle une pluralité d'historiques de traitement incluant des contenus de traitement de données sont liés par un couplage par chaîne ;
régler une première plage de traitement de données (H1) comprenant un premier historique de traitement (2), auquel l'accès est limité, dans la séquence de traitement de données (ch1) ;
générer un deuxième historique de traitement (4) qui est associé au premier historique de traitement (2) en extrayant des informations, auquel l'accès n'est pas limité, à partir du premier historique de traitement (2) ;
coupler par chaîne une deuxième plage de traitement de données (H2) comprenant le deuxième historique de traitement (4) à la séquence de traitement de données (ch1) ;
générer un troisième historique de traitement (5) qui est couplé par chaîne à la première plage de traitement de données (H1) et à la deuxième plage de traitement de données (H2) ;
divulguer une première chaîne de données qui fait passer la première plage de traitement de données (H1) à un détenteur d'un droit d'accès au premier historique de traitement (2), dans lequel la première chaîne de données s'étend du troisième historique de traitement (5) à un historique de présence (1) comprenant des propriétés de données qui sont une entrée du premier historique de traitement (2) et la première chaîne de données comprend le premier historique de traitement (2) ; et
divulguer une deuxième chaîne de données qui fait passer la deuxième plage de traitement de données (H2) sans faire passer la première plage de traitement de données (H1) à un non-détenteur du droit d'accès, dans lequel la deuxième chaîne de données s'étend du troisième historique de traitement (5) à l'historique de présence (1) et la deuxième chaîne de données comprend le deuxième historique de traitement (4).

9. Procédé de gestion, comprenant :
une génération (s1), par un ordinateur, d'une séquence de traitement de données (ch1) dans laquelle une pluralité d'historiques de traitement incluant des contenus de traitement de données sont liés par un couplage à chaîne ;
un réglage (s2) d'une première plage de traitement de données (H1) comprenant un premier historique de traitement (2), auquel l'accès est limité, dans la séquence de traitement de données (ch1) ;
une génération (s3) d'un deuxième historique de traitement (4) qui est associé au premier historique de traitement (2) en extrayant des informations, auquel l'accès n'est pas limité, à partir du premier historique de traitement (2) ;
un couplage par chaîne (s4) d'une deuxième plage de traitement de données (H2) comprenant le deuxième historique de traitement (4) à la séquence de traitement de données (ch1) ;
une génération (s1) d'un troisième historique de traitement (5) qui est couplé par chaîne à la première plage de traitement de données (H1) et à la deuxième plage de traitement de données (H2) ;
une divulgation d'une première chaîne de données qui fait passer la première plage de traitement de données (H1) à un détenteur d'un droit d'accès au premier historique de traitement (2), dans lequel la première chaîne de données s'étend du troisième historique de traitement (5) à un historique de présence (1) comprenant des propriétés de données qui sont une entrée du premier historique de traitement (2) et la première chaîne de données comprend le premier historique de traitement (2) ; et
une divulgation d'une deuxième chaîne de données qui fait passer la deuxième plage de traitement de données (H2) sans faire passer la première plage de traitement de données (H1) à un non-détenteur du droit d'accès, dans lequel la deuxième chaîne de données s'étend du troisième historique de traitement (5) à l'historique de présence (1) et la deuxième chaîne de données comprend le deuxième historique de traitement (4).
